Europäisches Patentamt

European Patent Office

Office européen des brevets

(11) Publication number: **0 440 280 A1**

# EUROPEAN PATENT APPLICATION

(21) Application number: 91200095.7

(51) Int. Cl.⁵: **H04N 11/08**

(22) Date of filing: **21.01.91**

(30) Priority: **29.01.90 NL 9000204**

(43) Date of publication of application:
**07.08.91 Bulletin 91/32**

(84) Designated Contracting States:
**BE DE ES FR GB IT SE**

(71) Applicant: **N.V. Philips' Gloeilampenfabrieken**
**Groenewoudseweg 1**
**NL-5621 BA Eindhoven(NL)**

(72) Inventor: **Janssen, Johannes Jozef Maria**
**c/o INT. OCTROOIBUREAU B.V., Prof.**

Holstlaan 6
NL-5656 AA Eindhoven(NL)
Inventor: **Tolhuizen, Ludovicus Marinus**
**Gerardus Maria**
c/o INT OCTROOIBUREAU B.V. Prof.
Holstlaan 6
NL-5656 AA Eindhoven(NL)

(74) Representative: **Kooiman, Josephus Johannes**
**Antonius et al**
**INTERNATIONAAL OCTROOIBUREAU B.V.**
Prof. Holstlaan 6
NL-5656 AA Eindhoven(NL)

(54) **Television transmission system of the MAC/packet type.**

(57) In a television transmission system of the MAC/packet type data signals and digital audio signals are transmitted in packets. Each packet comprises a packet header of H ($=31$) bits and a data field of N-H ($=720$) bits. To protect the data bits in a data packet from transmission errors, the data stream which is supplied by the data source is divided into data blocks of k data bits. These data blocks are subjected to a Fire encoding. Fire codewords having a length of $k+P$ bits are obtained by adding a number of P error correction bits. The values k and P are now chosen to be such that $k+P$ is an integral submultiple (D) of N-H. The D Fire codewords thus obtained, which jointly fill the data field of a data packet, are bit-sequentially interleaved with a depth D.

FIG.7

# TELEVISION TRANSMISSION SYSTEM OF THE MAC/PACKET TYPE.

## A. Background of the invention.

### A(1) Field of the invention.

The invention generally relates to a television transmission system of the MAC/packet type (MAC = multiplexed analog components) and to a transmitter and a receiver for use in such a system. The invention more particularly relates to an error-correcting encoding of the digital information in so-called data packets.

### A(2) Description of the prior art.

The television transmission systems of the MAC/packet family are specified in the extensive specification indicated as Reference 1 in section C. A more accessible description of such a system can be found in Reference 2.

Characteristic of such a television transmission system is that the analog luminance signal and the analog chrominance signal are transmitted in a time-division multiplex format for each picture line and that accompanying other signals are transmitted digitally and generally in a packet multiplex format. For example, audio signals originating from different audio sources and a number of data signals originating from different data sources are transmitted in a packet multiplex format.

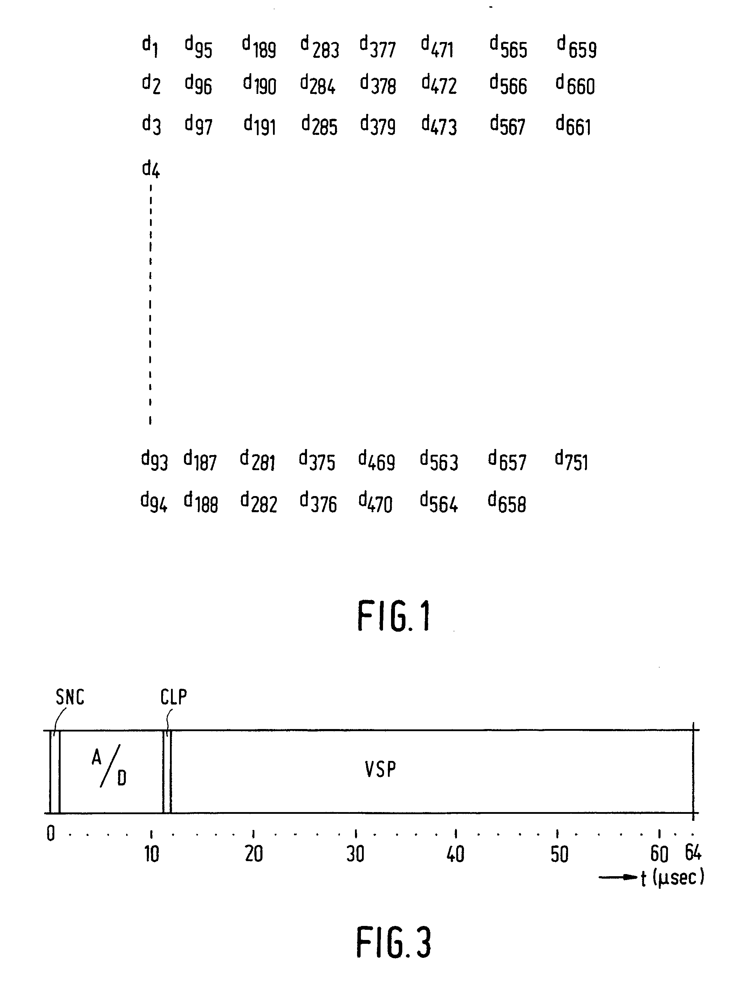

In the currently specified MAC/packet transmission system such a packet comprises a total of N = 751 symbols and is divided into a packet header of H = 31 symbols indicating the origin of the packet and a data field of N-H = 720 symbols comprising the useful information. If this useful information originates from a digital audio source, it is referred to as an audio packet, and if it originates from a data source, it is referred to as a data packet. All symbols of a packet are binary and will hereinafter be referred to as bits. They will be denoted by $d_1, d_2, d_3, \ldots d_{750}, d_{751}$, respectively. The first 31 bits ($d_1, d_2, d_3, \ldots d_{31}$) constitute the packet header. To minimise the effect of multi-bit transmission errors, the bits of a packet are transmitted in the sequence which is obtained when the matrix of bits shown in Fig. 1 is scanned row by row from left to right, starting from the top row. This transmission sequence is referred to as bit-interleaving and it is common practice to use the term interleaving depth D: this is the number of columns of the matrix shown in Fig. 1 (eight in this case).

The bit series thus obtained is subjected to a channel encoding, more specifically to a duobinary encoding and is subsequently suitably modulated on a carrier signal and transmitted to a MAC/packet receiver.

In the MAC/packet transmission system the audio signals are considered to be the most important digital signals. This is the reason why said specification mentions a number of methods of correcting a maximum possible number of transmission errors which may occur in audio packets. These methods generally consist of adding large numbers of error correction bits (also referred to as parity bits) to each individual audio sample, for example by means of Hamming encoding.

The 720 information bits of data packets in the data field are not protected from transmission errors. The effect of transmission errors in data originating from certain sources is minimised in that each data packet comprising data from said source is transmitted several times. The correct data can then be obtained by means of a majority decision.

However, such a repetition of data packets cannot always be realised, for example when such a data packet comprises additional picture information such as motion vectors which are generated, for example in high-definition television systems and which must be available in real time. Such packets will be referred to as HDTV data packets. In practice errors in such additional picture information data are found to result in significant artefacts in the reconstructed picture. Extra protection of this type of data is therefore no superfluous luxury. In view of the quantity of data of this type which has to be transmitted for each picture and in view of the available bit rate (20 Mb/sec) there is, however, little space for adding error correction bits.

## B. Object and summary of the invention.

It is an object of the invention to provide an optimum error-correcting encoding of the bits in these data packets, which encoding is adapted to the structure of the data packets.

According to the invention, a bit stream supplied by a data source is divided into data blocks each comprising k bits. P error correction bits are added to each one of these data blocks by means of a Fire encoding. The length of the data blocks (k bits) and the number of added error correction bits (P) is chosen to be such that the quotient (N-H)/(k + P) between the number of data bits (720) in the data field and the sum of the number of data bits in the data block and the number of error correction bits added thereto is equal to the interleaving depth D (= 8).

It is to be noted that the data block supplemented by the error correction bits will hereinafter be referred to as Fire codeword. Such a codeword will thus comprise 720/8 = 90 bits in the practical case.

A number of very essential effects is simultaneously achieved by using the measures according to the invention. In the first place it is achieved by said division of the bit stream that D (= 8) successive bits in the bit-interleaved bit stream are associated with different Fire codewords. When a burst error occurs, so that there are D (= 8) distorted bits, the result is that D successive Fire codewords each exhibit only one bit error which can be corrected by the added error correction bits. In other words, due to this division a resistance to burst errors with a length of D bits is realised. In the second place it is achieved by the Fire encoding that each Fire codeword comprises a minimum number of error correction bits so that an efficient transmission of data bits (that is to say, a number of useful data bits per second) is obtained, while a very high resistance to very long burst errors, i.e. longer than D = 8 bits is obtained in a simple manner without seriously affecting this efficient transmission. This property is of very essential importance for the television transmission system described. In fact, a so-called "Viterbi" decoder is increasingly being used in the receiver of this system for decoding the duobinary data signal. This decoder has a property which is eminently suitable for the transmission of duobinary signals via satellites. In fact, it does not only convert a duobinary signal into a binary signal, but it also has error-correcting properties in the sense that the probability of the presence of an error in its output signal is many times smaller than the probability of an error being introduced in the duobinary signal. For example, in a satellite channel the error probability is $10^{-3}$ while the probability of the presence of an error in the output bit stream of the "Viterbi" decoder may decrease to $10^{-6}$. However, experiments have proved that this "Viterbi" decoder has a very significant detrimental property. In fact, if it supplies a bit error at its output, there is a very great probability of an error occurring in a neighbouring subsequent bit position. If particularly the ordinal number of a bit subsequent to a distorted bit is equal to q, the probability of this bit also being distorted is equal to $2^{-q}$. In other words, errors generally occur in pairs at the output of a "Viterbi" decoder, while the distance between two errors of a pair is small, but the distance between two consecutive error pairs is large. If the distance between two errors in a pair is not larger than D (=8), these errors can be corrected in a simple manner. However, the probability of this distance being equal to D (=8) is now equal to $1/2^8 = 1/256$ so that there is a very great probability of two incorrect consecutive bits occurring in one codeword. If an incorrigible error becomes manifest at the output of the Viterbi decoder, there is a great probability that a burst error will become manifest in the relevant codeword. In practice this appears to be rarely longer than two bits. This situation, i.e. errors mainly occurring as a burst error in one and the same codeword, is eminently suitable for using the Fire encoding mode. In fact, this encoding mode is particularly capable of correcting burst errors, and it requires a minimum number of error correction bits, while the encoding and decoding circuits are implemented in a simple manner.

For the purpose of comparison it is to be noted that a Fire codeword of 90 bits is to comprise no more than P = 7 error correction bits to enable correction of one-bit errors in this codeword. Moreover, to be able to correct two consecutive bit errors, only p = 8 error correction bits are necessary. If BCH encoding were used instead of Fire encoding, the number of error correction bits would have to be chosen to be larger than 15 so as to enable correction of two consecutive bit errors in a codeword. In this case there are less than 75 data bits available for each data block, as against 82 in the case of Fire encoding.

For extensive information about Fire encoding reference is made to Reference 3 in the following section C.

C. References.
1. Specification of the systems of the MAC/packet family; Technical specification 3258-E October 1986;
European Broadcasting Union, technical centre - Brussels; pages 12-16, 30-32, 87-90.
2. The C-MAC/packet system for direct satellite television; H. Mertens, D.Wood;
EBU Technical Review, No. 200, August 1983, pages 172-185.
3. Theory and practice of error control codes; R.E. Blahut;
Addison-Wesley publishing company 1983; pages 112-119 and 130-158.
4. The Viterbi Algorithm;
G.D. Forney Jr;
Proceedings of the IEEE, Vol. 61, No. 3, March 1973, pages 268-278.

D. Brief description of the Figures.
Fig. 1 shows the bit-interleaving of the bits in the data field of a data packet.
Fig. 2 shows diagrammatically the general structure of a MAC/packet transmission system.
Fig. 3 shows diagrammatically the signals during a television picture line in a MAC/packet transmission system.
Fig. 4 shows the general embodiment of a divider circuit for dividing a polynomial by a fixed polynomial.

Figs. 5 and 6 show a number of polynomials.

Fig. 7 shows an embodiment of an error-correcting encoding circuit for use in the television transmission system of Fig. 2.

Fig. 8 shows an embodiment of an error-correcting decoding circuit for use in the television transmission system of Fig. 2.

Fig. 9 shows an embodiment of a detection circuit for use in the error-correcting decoding circuit of Fig. 8.

E. Explanation of the invention.

E(1) General structure of the MAC/packet transmission system.

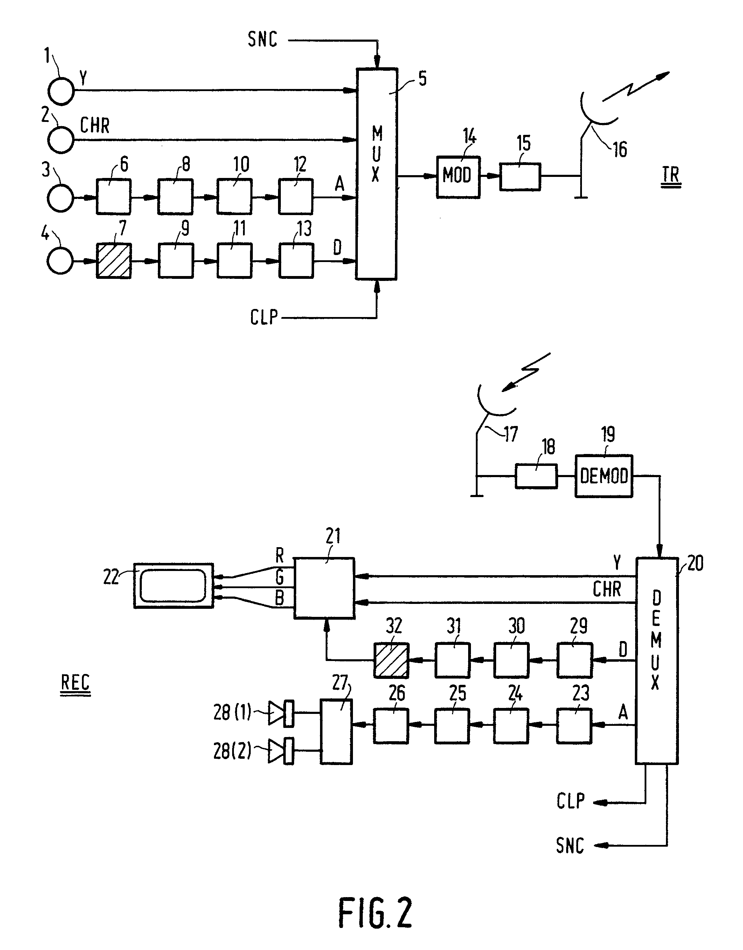

As is diagrammatically shown in Fig. 2, a transmission system of the MAC/packet family generally comprises a transmitter TR and a receiver REC. The transmitter has a plurality of information signal sources such as a source 1 which supplies an analog luminance signal Y for a television picture, a source 2 which supplies the associated analog chrominance signal CHR, a source 3 which supplies an audio signal in digital format associated with the program and a source 4 which supplies a data signal. This data signal may comprise different kinds of information, for example service information for the relevant program but also conditional access information, etc. It will hereinafter be assumed that the information supplied by source 4 relates to the video signal as supplied by the sources 1 and 2. More particularly it will be assumed that it comprises the motion vectors and other data which are transmitted for the purpose of high-definition televison from the transmitter to the receiver. These data will therefore be referred to as HDTV data.

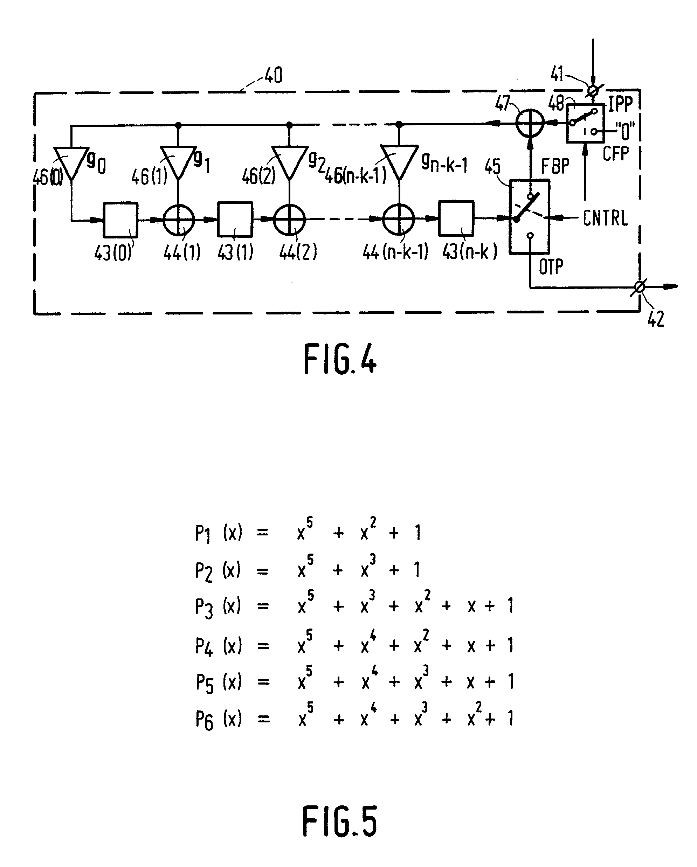

The two video signals Y and CHR are applied directly to a multiplex circuit 5 in which these signals are given a multiplex format for each picture line. The data streams supplied by the sources 3 and 4 are subjected to error-correcting encoding operations in respective error-correcting encoding circuits 6 and 7. Packet-forming circuits 8 and 9 receive the bit streams which are supplied by the circuits 6 and 7 and each time convert groups of 720 successive bits into an audio or data packet by adding a packet header of 31 bits to such a group. In this way packets of 751 bits are obtained which will be successively referred to by $d_1$, $d_2$, $d_3$, ... $d_{750}$, $d_{751}$. The packets thus obtained are applied to interleaving circuits 10 and 11 changing the sequence in which the bits are received. More particularly the bits of the packets occur at the outputs of the interleaving circuits in the sequence which is obtained by scanning the matrix shown in Fig. 1 row by row from left to right, starting from the top row. In the sequence thus obtained these bits are further applied to channel encoders 12, 13 which, in accordance with the MAC/packet standard, are implemented as so-called duobinary encoders. They supply the respective signals A (audio) and D (HDTV data) which, likewise as the video signals Y and CHR, are applied to the multiplex circuit 5 which further receives a synchronising signal SNC and a clamping signal CLP. Every 64 $\mu$sec., i.e. for each picture line of the television picture, this multiplex circuit supplies a multiplex block which has the general structure shown diagrammatically in Fig. 3. Each multiplex block comprises a number (7) of synchronising bits SNC, a number of bits (for example 199) of an audio packet A, a number (15) of clamping bits CLP and a video signal period VSP. For each active picture line of a field this period VSP comprises in time division multiplex the analog chrominance signal CHR and the analog luminance signal Y of the relevant active picture line. For each non-active picture line of a field (i.e. the picture lines occurring during the field retrace periods) this period VSP comprises 1061 bits originating from successive HDTV data packets. These multiplex blocks are suitably modulated on a carrier signal in a modulation circuit 14 and applied to a transmitter antenna 16 via an up-converter 15.

At the receiver end the transmitted signal is received by an antenna 17 and applied via a down-converter 18 to a demodulation circuit 19 of a receiver supplying, again every 64 $\mu$sec., the multiplex block which is shown in Fig. 3 and is applied to a demultiplex circuit 20. This circuit supplies at respective outputs the synchronising bits SNC, the clamping bits CLP, the luminance signal Y, the chrominance signal CHR, the digital audio signal A, the data signal D. The luminance and chrominance signals are applied to a video signal processing circuit 21 whose output supplies the three primary color signals for display on a monitor 22.

The digital audio signal A is applied to a duobinary decoding circuit 23 which converts the duobinary symbols into binary symbols (bits). The bits which are each time associated with a packet are placed in their original sequence in a de-interleaving circuit 24, while the packet header is removed from each packet in an unpacking circuit 24 and the remaining audio information bits are applied via an error correction circuit to an audio signal processing circuit 27 which supplies audio signals to loudspeakers 28(1) and 28(2).

The data signal D is applied to a Viterbi decoding circuit 29 (for more information see, for example Reference 4) which converts the received duobinary symbols into binary symbols (bits), likewise as the duobinary decoding circuit 23. The bits which are each time associated with a packet are also placed in their original sequence in a de-interleaving circuit 30. Also in this case the packet headers are removed from the packets in an unpacking circuit 31 and the remaining useful HDTV data are applied to an error-correcting decoding circuit 32 whose output signal is applied to the video signal processing circuit 21 in this case.

## E(2) The error-correcting encoding and decoding circuits.

### E(2.1) Theoretical background.

As is generally known, a series of bits of finite length is protected from transmission errors by adding a suitable number of error correction bits. This bit series will hereinafter be assumed to comprise k bits, which series is converted into a codeword of n bits by adding error correction bits. A special algorithm for determining these error correction bits is cyclic encoding. Said bit series is then considered as a polynomial whose coefficients correspond to the values of the bits in the bit series. Let it be assumed that a bit series D is constituted by the bits $d_{k-1}, \ldots d_2, d_1, d_0$ in which $d_i$ = 1 or 0 for i = 0, 1, 2, 3, ..., k-1. This bit series can then be considered as a polynomial $D(x)$ of the degree k-1 in accordance with the expression

$$(1) \ldots D(x) = d_{k-1}x^{k-1} + \ldots + d_2x^2 + d_1x + d_0$$

Furthermore a suitably chosen so-called generator polynomial $G(x)$ of the degree n-k is defined in accordance with the expression

$$(2) \ldots G(x) = g_{n-k}x^{n-k} + \ldots + g_2x^2 + g_1x + g_0$$

in which it holds for the coefficients $g_j$ that:
$g_j$ = 0 or 1 for j = 0, 1, 2, 3, ... n-k-1
and $g_{n-k}$ = 1.
By dividing the product polynomial $x^{n-k}D(x)$ by $G(x)$, a residual polynomial $R(x)$ is obtained whose coefficients $r_p$ represent the error correction bits which are added to the original bit series so as to form an output codeword of the error-correcting encoding circuit for this bit series.

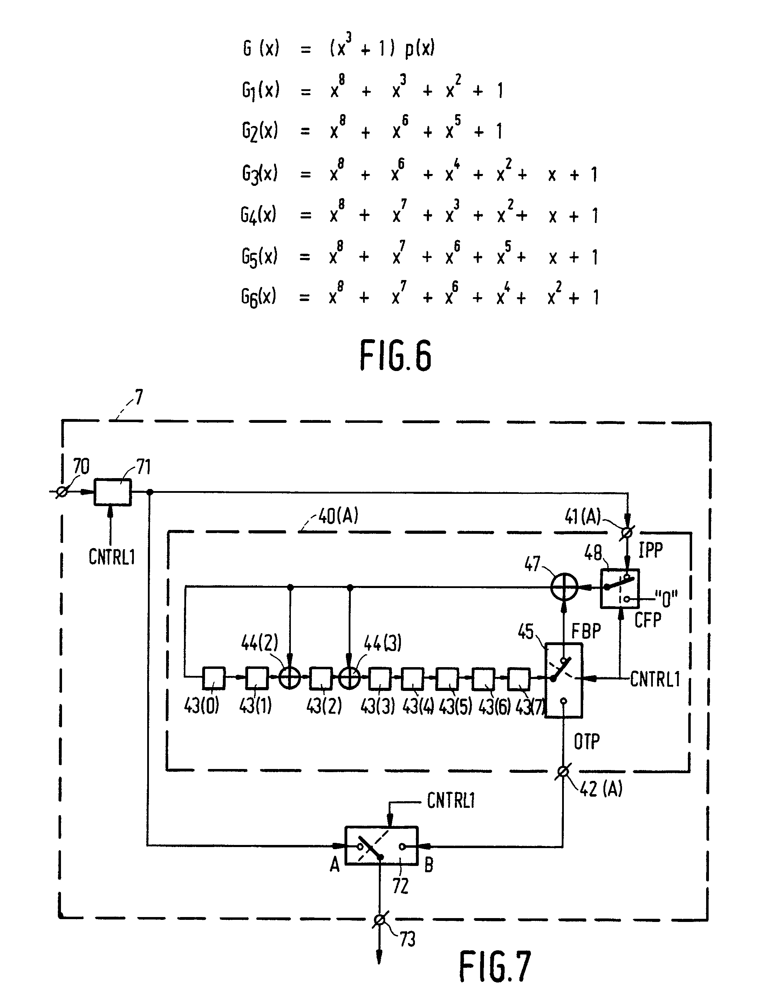

A possible embodiment of a circuit for multiplying the polynomial $D(x)$ by $x^{n-k}$ and for dividing the product polynomial by a polynomial $G(x)$ is shown in Fig. 4 for the general form of the generator polynomial indicated in expression (2), (see also Reference 3 Fig. 6.10 and Fig. 6.11) where it is denoted by reference numeral 40. This circuit 40 has an input 41, an output 42 and a shift register comprising n-k shift register elements 43(.), while a modulo-2-counter 44(.) is incorporated each time between two consecutive shift register elements. The output of this shift register is connected to the input of a two-position switch 45 having a feedback position FBP and an output position OTP and being controlled by a control signal CNTRL. In the feedback state FBP, which is shown in the Figure, the output of the shift register is connected to inputs of the modulo-2-counters 44(.) via a further modulo-2-counter 47 and via constant factor multipliers 46(.). The multiplication factor of the $i^{th}$ constant factor multiplier 46(i) is equal to the $i^{th}$ coefficient $g_i$ of the generator polynomial $G(x)$. A further input of modulo-2-counter 47 is connected to the output of a two-position switch 48 having an input position IPP and a constant factor position CFP and being controlled by the control signal CNTRL. In the Figure this two-position switch is in the input position, i.e. the further input of modulo-2-counter 47 is now connected to the input 41. The coefficients of the polynomial $D(x)$ (i.e. the bits of the pulse series) are now applied to modulo-2-counter 47 via the input 41 in the sequence $d_{k-1}, d_{k-2}, \ldots, d_2, d_1, d_0$. After $d_0$ has been written in the shift register via modulo-2-counter 47 and constant factor multipliers 46(.), switches 45 and 48 are set to the output position OTP (not shown) and the constant factor position CFP, respectively, whereafter the logic value "0" is applied to the further input of modulo-2-counter 47 and the contents of the shift register (n-k bits) are shifted to the output 42. These n-k bits represent the searched error correction bits.

The bits which are stored in the respective shift register elements 43(0), 43(1), 43(2), ... 43(n-1) at a given moment will hereinafter be considered as a group and the pattern of 0 and 1 bits occurring therein will be referred to as bit pattern. Although $2^{n-k}-1$ bit patterns are in principle possible in a group of n-k bits, the number of bit patterns which can occur in the circuit of Fig. 4 is limited by the implemented generator polynomial.

In the case of a MAC/packet transmission system in which eight consecutive bits at the output of the interleaving circuit 11 must be associated with different codewords, it holds that such a codeword should comprise at most 94 bits. A generator polynomial which is extremely favourable under the given circumstances is that for the Fire code. This generator polynomial has the shape

$$(3) \ldots G(x) = (x^{2t-1} + 1)p(x)$$

for binary symbols only.
In this expression, t represents the length of the burst errors which should be corrected and $p(x)$ is a polynomial whose degree is not lower than t which cannot be decomposed in factors so that $x^{2t-1} + 1$ cannot be divided either.

To enable a complete correction of all burst errors up to and including the length t, at least as many different bit patterns should be able to occur in the shift register elements 43(.) of circuit 40 for a burst error of a given length as correspond to the number of possible locations of this burst error in the output codeword. It is known from the Fire code theory that when using the generator polynomial given in expression (3), the total number of mutually different bit patterns (for a burst error) is equal to the product of the number of bit patterns which can be generated by the polynomial $x^{2t-1}+1$ and the number which can be generated by the polynomial $p(x)$. If $t = 2$, $x^{2t-1}+1 = x^3+1 = (x+1)(x^2-x+1)$. The number of bit patterns obtained by means of the polynomial $x+1$ is $2^1-1 = 1$, while the number which can be obtained by means of the polynomial $x^2-x+1$ is $2^2-1 = 3$ *so that this polynomial $x^3+1$ can yield a total of $1*3 = 3$ bit patterns. Since the generator polynomial should be capable of generating at least 94 different bit patterns, the degree of $p(x)$ will have to be at least equal to 6, also in view of the fact that $p(x)$ should not be divisible by any other polynomial. In fact, in that case this polynomial can generate $2^6-1 = 63$ different bit patterns, which brings the total number to $3*63 = 189$, which is amply sufficient. In this case a codeword of 94 bits would comprise nine error correction bits.

Said number of 189 different bit patterns is more than twice as large as is strictly necessary. It is considerably more efficient to build up a data field of a data packet from codewords having such a length that an exact integral number of such codewords fits in a data field. In practice a codeword of 90 bits is found to be an optimum choice. In this case the degree of $p(x)$ can be chosen to be equal to 5 if $t = 2$. The number of different bit patterns which can now be generated by the generator polynomial is $3 * (2^5-1) = 93$ and the number of error correction bits in each codeword is eight so that a data field now comprises a total number of no more than $8*8 = 64$ error correction bits.

If the data field of the data packet were to be divided into, for example 24 codewords of 30 bits each, $p(x)$ of the degree 4 could be taken so that seven error correction bits would be required for each codeword, which would bring the total number of error correction bits per data field to 168.

The optimum codeword length is found to be equal to the number of bits in a data field (now 720) divided by the chosen interleaving depth D (now eight). When using the Fire encoding mode, a minimum number of bits of such a codeword fulfils the function of error correction bit (eight in the case considered).

For the polynomial $p(x)$ of the degree five, which is usable for the codeword length of 90 bits, a choice can now be made from the six polynomials indicated in Fig. 5. The associated generator polynomials $G(x)$ are indicated in Fig. 6. In view of the quantity of hardware which is required for implementing the error-correcting encoding circuit 7 and the error-correcting decoding circuit 32, the generator polynomial $G_1(x)$ is the best choice if $t = 2$.

For the sake of completeness it is to be noted that if $t = 4$ a polynomial $p(x)$ of the degree four can be taken, which will then result in 11 error correction bits per codeword of 90 bits.

E(2.2) Practical implementations.

An embodiment of the error-correcting encoding circuit 7 is shown in Fig. 7 for the case where $t = 2$. The circuit has a data input 70 which receives the data bits from data source 4 (see Fig. 2). The data bits are applied to a multibit memory 71, for example an eight-bit fifo, via this data input. It is to be noted that the length of this memory (now eight bits) corresponds to the number of error correction bits in each codeword. This fifo 71 is controlled by a binary control signal $CNTRL_1$. If this control signal has the logic value "1", the data bits stored in this fifo are applied to its output. If the control signal has the logic value "0", data bits are written and stored in the fifo but no data bits appear at its output. Consequently, the bit stream appearing at the data input 70 and supplied by data source 40 is divided into data blocks. The output of this fifo 71 is connected to an input A of a multiplex circuit 72 and to the input 41(A) of a circuit 40(A) whose structure corresponds to the circuit shown in Fig. 4 but in which the generator polynomial $G_1(x)$ is now implemented so that $g_1 = g_4 = g_5 = g_6 = g_7 = 0$ while the associated constant factor multipliers as well as the associated modulo-2-counters are omitted. The output 42(A) of this circuit 40(A) is connected to an input B of the multiplex circuit 72. This error-correcting encoding circuit 7 operates as follows. As soon as the control signal $CNTRL_1$ has the logic value "1", the data bits stored in the fifo 71 are applied one by one at a rate $1/T_b$ to the input A of the multiplex circuit 72 and directly passed on to its output 73. These data bits are also applied to the circuit 40(A) whose switch 48 is set to the input position IPP by the control signal $CNTRL_1$ and switch 45 is set to the feedback position FBP. After the control signal $CNTRL_1$ has had the logic value "1" during 82 clock pulse periods Tb, it assumes the logic value "0" during 8 clock pulse periods $T_b$. As a result switch 48 is set to the constant factor position CFP and switch 45 is set to the output position OTP. Output 73 of multiplex circuit 72 is connected to its B input so that the eight bits in the shift register of circuit 40(A) are now consecutively added to the data block of 82 data bits, thus obtaining the desired 90-bit Fire codeword.

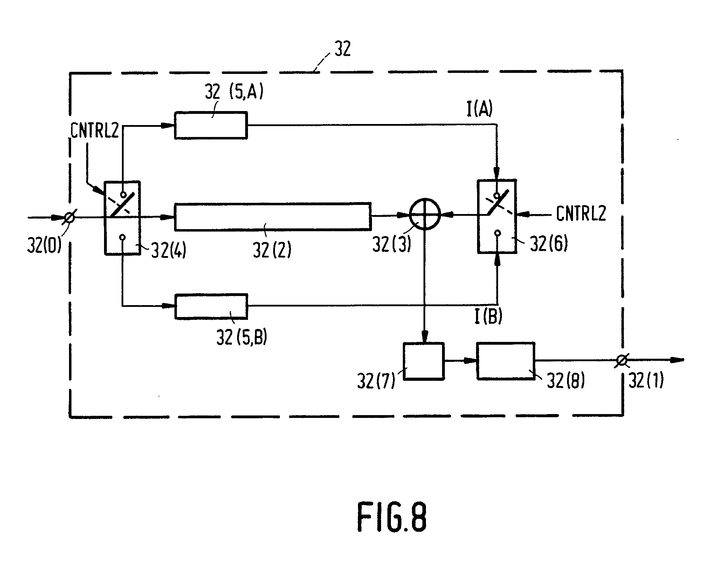

An error-correcting decoding circuit 32 is shown in Fig. 8. It has an input 32(0) and an output 32(1). The 90 data bits of a Fire codeword occurring at the input 32(0) are directly applied to a shift register 32(2) which has a length of 90 bits and from this shift register to a first input of a modulo-2-counter 32(3). Successive Fire codewords are alternately applied by means of a switch 32(4) to a first and a second detection circuit 32(5,A) and 32-(5,B). To this end this switch 32(4) is controlled by a control signal $CNTRL_2$ alternately having the logic value "1" during 90 consecutive clock pulse periods $T_b$ and the logic value "0" during 90 consecutive clock pulse periods $T_b$. The detection circuits 32(5,A) and 32(5,B) supply the check bits 1(A) and 1(B), respectively, which are applied to a second input of the modulo-2-counter 32(3) via a selection circuit 32(6). To this end this selection circuit is controlled by the control signal $CNTRL_2$. The desired possibly corrected bits of a data block, followed by the error correction bits now occur at the output of modulo-2-counter 32(3). A possibly distorted data bit is corrected in that a check bit I(.) is generated with the logic value "1" by the detection circuit 32(5,.) which is active at the moment when such a distorted bit occurs at the output of shift register 32(2), which check bit is also applied to the modulo-2-counter 32(3) via the selection circuit 32(6). The bits supplied by modulo-2-counter 32(3) are applied to a separating circuit 32(7) in which the error correction bits are suppressed and which exclusively applies the useful data bits to a buffer 32(8) whose contents are applied to the output 32(1) at a constant rate.

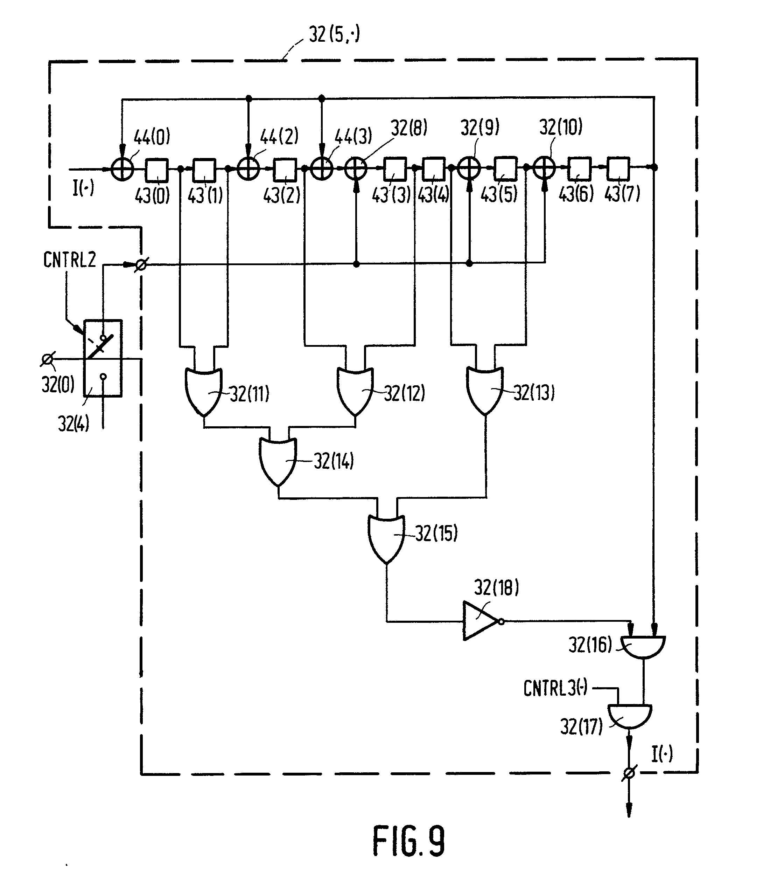

An embodiment of the detection circuit 32(5.) is shown in Fig. 9. It largely corresponds to the error-correcting encoding circuit shown in Fig. 7, but differs on the following points. Further modulo-2-counters 32(8), 32(9) and 32(10) which also receive the bits of the received Fire codewords are arranged between the shift register elements 43(2) and 43(3), between the shift register elements 43(4) and 43(5) and between the shift register elements 43(5) and 43(6). A decoding network comprising a number of OR gates 32(11)-32(15), a number of AND gates 32(16), 32(17) and an inverter 32(18) is connected to outputs of selected shift register elements. AND gate 32(17) is controlled by a control signal CNTRL 3(.). This control signal has the logic value "0" as long as bits of the 90-bit Fire codeword are applied to the detection circuit. If the detection circuit no longer receives any bits, this control signal assumes the logic value "1". In that case AND gate 32(17) supplies the check bits I(.) which are applied to the selection circuit 32(5) as well as to an input of modulo-2-counter 44(0). This detection circuit now operates as follows. The 90 bits of the Fire codeword are applied one by one to the different modulo-2-counters 32(8)-32(10) so that the initial contents of the shift register elements 43-(3), 43(5) and 43(6) change each time. After all 90 data bits of a Fire codeword have been written in the shift register 32(2) (see Fig. 8) and processed in the detection circuit 32(5,.), this detection circuit no longer receives any further data bits. The detection circuit 32(5,.) is now left to itself and thereby generates 90 check bits I(.), one for each data bit applied to the modulo-2-counter 32(3). If this data bit is not distorted, the associated check bit will have the logic value "0", or otherwise the logic value "1". After 90 check bits have been generated, the shift register elements 43(.) are reset.

## Claims

1. A television transmission system of the type in which a data signal from a data source, together with a video signal is transmitted in a time division multiplex format from a transmitter to a receiver, which data signal is to this end accommodated in data fields of data packets, each data packet comprising N data symbols and each data field comprising N-H data symbols, the N data symbols of such a data packet being symbol-sequentially interleaved to a depth D, characterized in that the transmitter of said transmission system is adapted to divide the data signal into data blocks of k data symbols each, to convert each data block into a Fire codeword comprising n = k + P data symbols in which P represents the number of error correction symbols and in which the number of data symbols of each block is defined by the relation

   $$(N-H)/(k + P) = D$$

   the receiver being adapted to generate a corresponding check symbol for each data symbol of a data block and to correct a data symbol when the corresponding check symbol deviates from a predetermined symbol.

2. A transmitter suitable for use in a transmission system as claimed in Claim 1, in which a data signal from a data source, together with a video signal is transmitted in a time divison multiplex format to a receiver, which data signal is to this end accommodated in data fields of data packets, each data packet comprising N data symbols and each data field comprising N-H data symbols, the N data symbols of a data packet being symbol-sequentially interleaved to a depth D, characterized in that said transmitter is adapted to divide the data signal supplied by the data source into data blocks of k data symbols each, to convert each data block into a Fire codeword comprising n = k+P data symbols, in which P represents the number of error correction symbols and in which the number of data symbols k of each data block is defined by the relation

$$(N-H)/(k+P) = D$$

3. A transmitter as claimed in Claim 2 in which the generator polynomial for the Fire codeword is equal to

$$(x^{2t-1} + 1) \, p(x)$$

characterized in that $p(x) = x^5 + x^2 + 1$ and t is equal to two.

4. A transmitter as claimed in Claim 2, in which the number of data symbols (N-H) of a data field is equal to 720, the interleaving depth D is equal to eight, characterized in that the number of data symbols k of each data block is equal to eighty-two.

5. A receiver suitable for use in a transmission system as claimed in Claim 1 and suitable for receiving data blocks transmitted by a transmitter as claimed in any one of Claim 2, 3 or 4, characterized in that it is adapted to generate a corresponding check symbol for each data symbol of a data block and to correct a data symbol when the corresponding check symbol deviates from a predetermined symbol.

$d_1$ $\quad$ $d_{95}$ $\quad$ $d_{189}$ $\quad$ $d_{283}$ $\quad$ $d_{377}$ $\quad$ $d_{471}$ $\quad$ $d_{565}$ $\quad$ $d_{659}$

$d_2$ $\quad$ $d_{96}$ $\quad$ $d_{190}$ $\quad$ $d_{284}$ $\quad$ $d_{378}$ $\quad$ $d_{472}$ $\quad$ $d_{566}$ $\quad$ $d_{660}$

$d_3$ $\quad$ $d_{97}$ $\quad$ $d_{191}$ $\quad$ $d_{285}$ $\quad$ $d_{379}$ $\quad$ $d_{473}$ $\quad$ $d_{567}$ $\quad$ $d_{661}$

$d_4$

$d_{93}$ $\quad$ $d_{187}$ $\quad$ $d_{281}$ $\quad$ $d_{375}$ $\quad$ $d_{469}$ $\quad$ $d_{563}$ $\quad$ $d_{657}$ $\quad$ $d_{751}$

$d_{94}$ $\quad$ $d_{188}$ $\quad$ $d_{282}$ $\quad$ $d_{376}$ $\quad$ $d_{470}$ $\quad$ $d_{564}$ $\quad$ $d_{658}$

# FIG.1

SNC $\qquad$ CLP

A/D $\qquad\qquad$ VSP

0 . . . . . . . 10 . . . . . 20 . . . . . 30 . . . . . 40 . . . . . 50 . . . . . 60 64

$\longrightarrow$ t (µsec)

# FIG.3

FIG.2

FIG.4

$$P_1(x) = x^5 + x^2 + 1$$

$$P_2(x) = x^5 + x^3 + 1$$

$$P_3(x) = x^5 + x^3 + x^2 + x + 1$$

$$P_4(x) = x^5 + x^4 + x^2 + x + 1$$

$$P_5(x) = x^5 + x^4 + x^3 + x + 1$$

$$P_6(x) = x^5 + x^4 + x^3 + x^2 + 1$$

FIG.5

$$G(x) = (x^3 + 1)\, p(x)$$

$$G_1(x) = x^8 + x^3 + x^2 + 1$$

$$G_2(x) = x^8 + x^6 + x^5 + 1$$

$$G_3(x) = x^8 + x^6 + x^4 + x^2 + x + 1$$

$$G_4(x) = x^8 + x^7 + x^3 + x^2 + x + 1$$

$$G_5(x) = x^8 + x^7 + x^6 + x^5 + x + 1$$

$$G_6(x) = x^8 + x^7 + x^6 + x^4 + x^2 + 1$$

## FIG.6

## FIG.7

FIG.8

FIG.9

European
Patent Office

# EUROPEAN SEARCH REPORT

Application Number

EP 91 20 0095

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | SYMPOSIUM RECORD OF THE JOINT SESSIONS (BROADCAST AND CATV) OF THE 15TH INTERNATIONAL TV SYMPOSIUM, Montreux, 11th - 17th June 1987, pages 181-204; C. SCHEPERS et al.: "An integrated multinorm receiver"<br>* Page 196, lines 15-24 * | 1-5 | H 04<br>N 11/08 |
| Y | EP-A-0 046 963   (SIEMENS AG)<br>* Page 3, line 3 - page 7, line 25 * | 1-5 | |
| A,D | RUNDFUNKTECHNISCHE MITEILLUNGEN, vol. 29, no. 1, 1985, pages 23-35; C. DOSCH: "C-MAC/Paket - Normvorschlag der europäischen Rundfunkunion für den Satellitenrundfunk"<br>* Page 28, right-hand column, line 20 - page 29, right-hand column, line 44 * | 1-5 | |
| A | US-A-4 677 623   (K. IWASAKI et al.)<br>* Column 7, line 7 - column 19, line 21 * | 1-5 | |
| A | FR-A-2 533 782   (L'ETAT FRANCAIS)<br>* Page 20, line 31 - page 31, line 10 * | 1-5 | TECHNICAL FIELDS SEARCHED (Int. Cl.5) |
| A | RTM - RUNDFUNKTECHNISCHE MITTEILUNGEN, vol. 32, no. 6, November-December 1988, pages 269-280; G. EITZ et al.: "Fehlerschutzstrategien für die Satellitenübertragung von Fernsehtext" | | H 04 N |
| A | G.T. WATERS: "Spécification des systèmes de la famille MAC/paguets", Tech. 3258-F, pages 85-130,270-292, Union Europeenne de Radiodiffusion, Brussels, BE; partie 3: "Spécification du multiplex son/donées et des méthodes de codage du son", Appendice à la partie 3: "Guide pour la réalisation du récepteur" | | |

—/—

The present search report has been drawn up for all claims

| Place of search | Date of completion of search | Examiner |
|---|---|---|
| The Hague | 19 March 91 | VERSCHELDEN J. |

European
Patent Office

# EUROPEAN SEARCH
# REPORT

Application Number

**EP 91 20 0095**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | SMPTE JOURNAL, vol. 90, no. 7, July 1981, pages 611-614, Scarsdale, New York, US; Y. ETO et al.: "Experimental digital VTR with trilevel recording and fire code error correction" | | |

TECHNICAL FIELDS
SEARCHED (Int. Cl.5)

The present search report has been drawn up for all claims

| Place of search | Date of completion of search | Examiner |
|---|---|---|
| The Hague | 19 March 91 | VERSCHELDEN J. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document